# EUROPÄISCHE PATENTSCHRIFT

(11) **EP 4 080 833 B1**
(45) Veröffentlichungstag und Bekanntmachung des Hinweises auf die Patenterteilung: **02.10.2024**
(21) Anmeldenummer: 22169750.1
(22) Anmeldetag: 25.04.2022
(51) Int. Cl.: H04L 12/40

(54) **VERFAHREN UND VORRICHTUNG ZUR ÜBERTRAGUNG VON BITSTRÖMEN IN EINEM KOMMUNIKATIONSBUSSYSTEM**
METHOD AND DEVICE FOR TRANSMITTING BIT FLOWS IN A COMMUNICATION BUS SYSTEM
PROCÉDÉ ET DISPOSITIF DE TRANSMISSION DES FLUX DE BITS DANS UN SYSTÈME DE BUS DE COMMUNICATION

(30) Priorität: 23.04.2021 EP 21170229
(43) Veröffentlichungstag der Anmeldung: 26.10.2022
(73) Patentinhaber: Elmos Semiconductor SE, 44227 Dortmund (DE)
(72) Erfinder: Fronen, Rob, Ratingen (DE); Leitner, Thomas, Dresden (DE)
(74) Vertreter: dompatent von Kreisler Selting Werner - Partnerschaft von Patent- und Rechtsanwälten mbB

(56) Entgegenhaltungen:
- EP-A2- 2 779 490
- US-A1- 2011 219 208
- US-A1- 2014 312 928

## Beschreibung

Die Erfindung betrifft ein Verfahren zur Übertragung von Bitströmen in einem Daisy-Chain-Kommunikationsbussystem, das einen Master und eine Vielzahl von Slaves aufweist, die seriell in einen mit dem Master verbundenen Datenbus geschaltet sind.

Ferner betrifft die Erfindung eine Vorrichtung für die Verwendung als Slave in einem zuvor beschriebenen Daisy-Chain-Kommunikationsbussystem.

Die Anzahl an LED-Applikationen insbesondere im Automotive-Bereich ist in der jüngsten Vergangenheit stark angestiegen. So existieren heutzutage im Innenraum des Fahrzeugs (aber auch außerhalb eines Fahrzeugs) eine Vielzahl von LED-Applikationen für sogenanntes Ambient Light in Form von Lichtbändern, deren Farbe und Intensität vom Endkunden veränderbar sind und somit die LED-Applikation insoweit konfigurierbar ist. Gerade im Kfz-Sektor ist man an kostengünstigen Lösungen für derartige Anwendungen interessiert.

Die Ansteuerung der Vielzahl von typischerweise farbigen Lichtquellen, die in erster Linie als LEDs ausgebildet sind, erfolgt über Kommunikationsbussysteme mit einem Datenbus, an den ein Busmaster angeschlossen ist. In dem Datenbus sind eine Vielzahl von Busknoten (nachfolgend auch Slaves genannt) seriell geschaltet. Ein derartiges Bussystem ist ein Daisy-Chain-Kommunikationsbussystem, welches insbesondere auf Basis von LVDS (Low Voltage Differential Signaling) kostengünstig ist. Ein Slave eines derartigen Kommunikationsbussystems kann als UART (Universal Asynchronous Receiver Transmitter) bezeichnet werden.

Insbesondere bei Lichtanwendungen mit einer großen Anzahl von Lichtquellen verursachen die diesem System inhärenten Asymmetrien der analogen Transceiver jedes UARTs Kommunikationsprobleme, und zwar insbesondere am Ende der Kette. Jeder Slave fungiert sozusagen als Relais für den an den nächsten Slave zu sendenden Bitstrom. Da jeder Slave eine, wenn auch geringfügige, Asymmetrie beim Verarbeiten zum Weitersenden des Bitstroms an den nächsten Slave aufweist (nämlich in Form einer Zeitdifferenz zwischen steigenden und fallenden Flanken des wiederhergestellten Signals), akkumuliert sich diese Asymmetrie von Slave zu Slave, was im ungünstigsten Fall sogar zu Bitverlusten bei den letzten Slaves der Kette führen kann.

Aus US-A-2011/0219208 ist ein Multi-Peta-Skalierter paralleler Supercomputer bekannt, bei dem Daisy-Chain-Bussysteme eingesetzt werden, über die Zählerwerte übertragen werden. Hier erfolgt eine Abtastung der Signale in jedem Teilnehmer der Bussysteme. In Absatz [1677] ist beschrieben, dass das Abtastsignal über eine PLL oder über eine DLL generiert wird. Aufgrund der Darstellung in den zugehörigen Figuren ist erkennbar, dass über Latchbatterien Einfluss auf die Abtastrate genommen wird.

Aufgabe der Erfindung ist es, eine kostengünstige Lösung für das zuvor beschriebene Problem anzugeben.

Zu diesem Zweck schlägt die Erfindung ein Verfahren zur Übertragung von Bitströmen in einem Daisy-Chain-Kommunikationsbussystem mit einem Busmaster und einer Vielzahl von Slaves vor, die seriell in einen mit dem Busmaster verbundenen Datenbus geschaltet sind, wobei ein Bitstrom von einem Slave als Empfangsbitstrom empfangen und von ihm als Sendebitstrom zu einem benachbarten Slave gesendet wird, wobei bei dem Verfahren in einem Slave die Schritte des Anspruchs 1 durchgeführt werden.

Einzelne Ausgestaltungen des erfindungsgemäßen Verfahrens sind Gegenstand der Ansprüche 2 und 3.

Ferner wird mit der Erfindung eine Vorrichtung zur Verwendung als Slave für ein Daisy-Chain-Kommunikationsbussystem mit einem Busmaster und einer Vielzahl von Slaves vorgeschlagen, wobei der Slave von dem Busmaster oder von einem benachbarten Slave einen Empfangsbitstrom empfängt und einen Sendebitstrom erzeugt sowie an einen benachbarten oder an seinen anderen benachbarten Slave sendet und wobei die Vorrichtung die Merkmale des Anspruchs 4 aufweist.

Mit der Erfindung wird sinngemäß vorgeschlagen, in jedem Slave das Bitstromsignal für den folgenden Slave neu zu bilden anstatt das insoweit empfangene Bitstromsignal lediglich unverändert an den Nachbar-Slave weiterzugeben. Es erfolgt also insoweit ein "Digital Retiming" des Empfangsbitstroms des Slaves, das dieser lokal bildet, und zwar unter Verwendung eines Abtastsignals, das durch Frequenzteilung eines internen Taktoszillatorsignals, welches typischerweise von einem RC-Oszillator stammt, erzeugt wird. Der internen Taktoszillator (z.B. RC-Oszillator) läuft in Relation zum Empfangsbitstrom frei, also ohne Phasen- und Frequenzbezug zum Empfangsbitstrom. In einem nachgeschalteten Frequenzteiler, der typischerweise als rationaler Frequenzteiler ausgebildet ist, wird dann das Abtastsignal erzeugt. Typischerweise synchronisiert das Abtastsignal automatisch die Frequenz, mit der die Bits des Empfangsbitstroms in dem Slave "einlaufen". Ein derartiger Bitstrom umfasst neben mindestens einem Startbit und mindestens einem Stoppbit ferner die Payload bildenden Bits und kann optional auch ein oder mehrere Parity-Bits zur Erkennung von Übertragungsfehlern aufweisen.

Erfindungsgemäß wird der Sendebitstrom für die Weitergabe an den nächsten Slave mit Erkennung jedes Bits des Empfangsbitstroms, also insoweit sukzessive und bitweise erzeugt. Mit Abschluss des Empfangs eines Empfangsbitstroms liegt also lediglich um die Übertragungsdauer eines einzelnen Bits des Empfangsbitstroms zeitverzögert dann der Sendebitstrom vor, dessen Bits also quasi latenzfrei weitergegeben werden, wenn man einmal davon ausgeht, dass die Baudraten bei Hochgeschwindigkeitskommunikationssystemen, wie es bei LVDS-Anwendungen gegeben ist, mehrere MB/s betragen (beispielsweise ca. 10 MB/s). Derartig hochfrequent betriebene Kommunikationsbussysteme eignen sich insbesondere dann, wenn der Kommunikationsbus eine große Vielzahl von Lichtquellen aufweist. Die Latenz bei der Übertragung der Information vom Busmaster zum letzten Slave der Kette ist so gering, dass sie vom menschlichen Auge nicht wahrgenommen wird.

Die Bildung des Sendebitstroms erfolgt hinsichtlich der Frequenz, mit der die einzelnen Bits aufeinanderfolgen, anhand des Abtastsignals. Typischerweise wird der Empfangsbitstrom überabgetastet (oversampling), wobei der Grad n der Überabtastung gleich dem Verhältnis aus der Übertragungsdauer eines Bits und dem zeitlichen Abstand der aufeinanderfolgenden Abtastungen ist. Ist dieses Verhältnis bekannt, so kann der Sendebitstrom als zum Empfangsbitstrom synchron generiert werden, was erfindungsgemäß im Slave stattfindet.

Mit dem erfindungsgemäßen Konzept lässt sich insbesondere die LVDS-Konzeption, die gegenüber herkömmlichen Automotive-Kommunikationsbussen (wie z.B. LIN, CAN ...) deutliche Kosteneinsparungen mit sich bringt, vorteilhaft einsetzen. Dies gelingt erfindungsgemäß durch das sogenannte "Digital Retiming", wonach erfindungsgemäß nicht erst abgewartet wird, bis ein gesamter Datenframe empfangen worden ist, sondern indem nach jedem empfangenen Bit bereits der Sendebitstrom aufgebaut und sozusagen sukzessive und bitweise vervollständigt, und gesendet wird.

Eine weitere Besonderheit des erfindungsgemäßen Konzepts ist darin zu sehen, dass die Frequenz des internen Taktoszillatorsignals, d.h. also die Frequenz des internen Taktoszillators, um weniger als eine Zehnerpotenz oberhalb der Frequenz liegt, mit der die Bits des Empfangsbitstroms aufeinanderfolgen. Die Frequenz des internen und typischerweise relativ ungenauen Taktsignals liegt also weniger als eine Zehnerpotenz über der Kommunikationsfrequenz. Aus der Frequenz des Taktsignals wird durch den Frequenzteiler, bei dem es sich vorteilhafterweise, um einen rationalen Frequenzteiler handelt, das Abtastsignal generiert. Die Synchronisation des generierten Abtastsignals hinsichtlich Frequenz und Phase auf die Frequenz und Phase der Kommunikation erfolgt in kürzester Zeit, und zwar innerhalb einer Dauer von etwas mehr als einer Bitdauer. Hierbei wird eine Rückkopplung einer Fehlsynchronisation innerhalb des Frequenzteilers genutzt, der sich sozusagen selbst korrigiert. Die ermittelten Parameter zur Erlangung der Synchronisation des Abtastsignals mit der Kommunikation können gespeichert werden, um beim nächsten einlaufenden Empfangsbitstrom darauf aufsetzend das Abtastsignal wieder zu synchronisieren.

Wie bereits zuvor beschrieben, ist es typischerweise so, dass die Frequenz des Abtastsignals für eine n-fache Überabtastung, mit n als natürliche Zahl größer 1, als Verhältnis n zwischen der Bitübertragungsdauer und dem Zeitabstand zwischen jeweils zwei aufeinanderfolgenden Abtastungen gewählt wird. Typischerweise wird dabei die n-fache Überabtastung, die zu der Frequenzerhöhung des Abtastsignals führt, bei der zeitlichen Aufeinanderfolge, mit der die Sendebits gesendet werden, unberücksichtigt gelassen.

Bei dem erfindungsgemäßen Konzept kann mit Vorteil ein rationaler Frequenzteiler eingesetzt werden, der aus dem internen Taktoszillatorsignal ein Abtastsignal erzeugt, welches ein ganzzahliges oder in Zweierpotenz gebrochenes rationales Frequenzverhältnis von 2^{-m} zum internen Taktoszillatorsignal aufweist, mit m als natürliche Zahl größer 0. In Zweierpotenz gebrochen rational bedeutet beispielsweise 0,5 oder 0,25 oder 0,125 oder 0,064 usw. und Vielfache davon. Auch nach langer Zeit hat ein mit überschaubarem Kostenaufwand hergestellter rationaler Frequenzteiler (bei stabilem Eingangssignal) gegenüber einem idealen rationalen Frequenzteiler eine Abweichung von lediglich maximal einer internen Taktperiode. Anders als bei nicht rationalen Frequenzteilern summieren sich beim rationalen Frequenzteiler eben gerade kleine Abweichungen nicht auf.

Die Erfindung wird nachfolgend anhand eines Ausführungsbeispiel und unter Bezugnahme auf die Zeichnung näher erläutert. Im Einzelnen zeigen dabei:
- Fig. 1: ein Daisy-Chain-Kommunikationsbussystem mit einem Busmaster und einer Vielzahl von Slaves und
- Fig. 2: als Blockschaltbild den Schaltungsaufbau eines Slave.

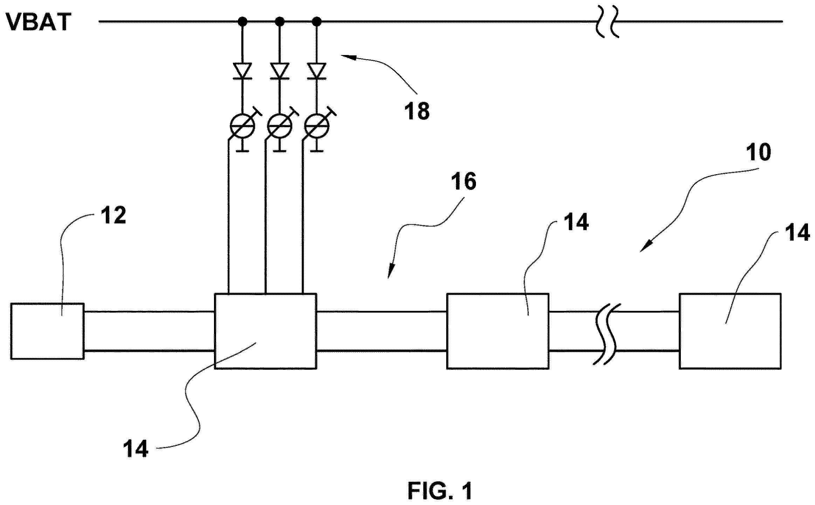

Fig. 1 zeigt eine Übersichtsdarstellung eines Daisy-Chain-Kommunikationsbussystems 10, das einen Busmaster 12 und eine Anzahl von X-Slaves 14 aufweist. Es können beispielsweise bis zu 256 (aber auch mehr) Slaves vorhanden sein. Sie sind über eine in diesem Ausführungsbeispiel Zweidraht-Kommunikationsleitung 16 in Serie geschaltet und mit dem Busmaster 12 verbunden. Über die Zweidraht-Kommunikationsleitung 16 werden in diesem Ausführungsbeispiel differentielle Spannungssignale mit recht hoher Frequenz übertragen, wie es beim Schnittstellen-Standard LVDS für Hochgeschwindigkeitsdatenübertragung vorgesehen ist. LVDS ist standardisiert nach ANSI/TIA/EIA-644-1995.

Als Anwendungsbeispiel des Daisy-Chain-Kommunikationsbussystems 10 ist in Fig. 1 eine LED-Anwendung gezeigt, bei der jedem Slave 14 eine RGB-Beleuchtungseinheit 18 zugeordnet ist, die vom Digitalteil des betreffenden Slave 14 gesteuert wird, der wiederum seine Daten ausgehend vom Busmaster 12 und über die einzelnen zwischen dem besagten Slave 14 und dem Busmaster 12 angeordneten Slaves 14 weitergeleitet erhält.

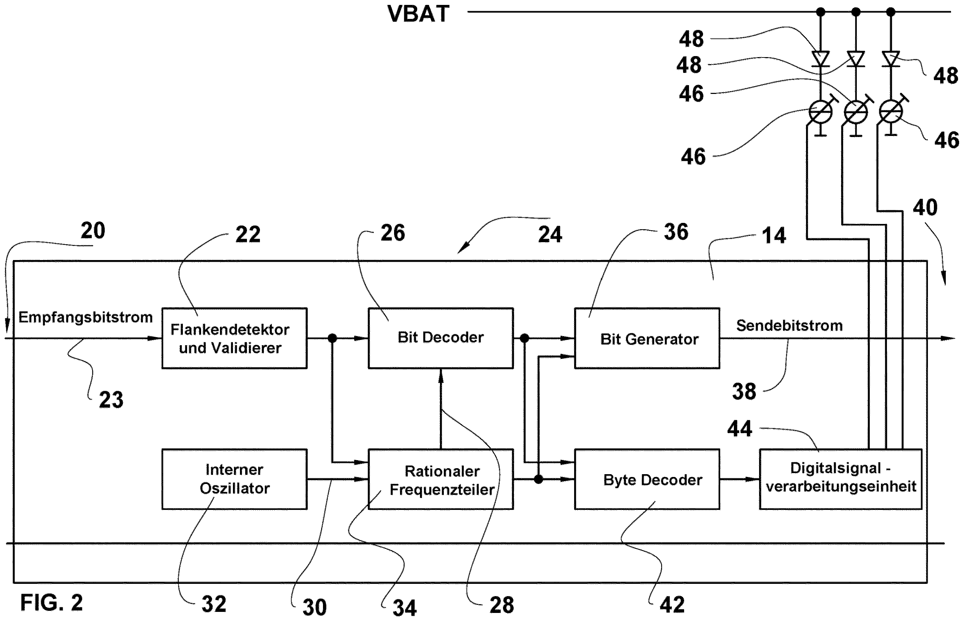

Die zur Beschreibung der Erfindung wesentlichen Schaltungskomponenten eines Slave 14 sind in Fig. 2 gezeigt. Über den zum Busmaster 12 weisenden Abschnitt 20 der Zweidraht-Kommunikationsleitung 16 empfängt der Slave 14 einen Empfangsbitstrom 23 aus einzelnen Bits mit einer bestimmten recht hohen Übertragungsfrequenz. Über einen Flankendetektor 22 werden die Anfänge der einzelnen Bits eines Byteframes erkannt. Zur Abtastung der insoweit in den Slave 14 einlaufenden Bits des Empfangsbitstroms 23 dient eine Abtastvorrichtung 24, die einen Bit-Decoder 26 aufweist und ein Abtastsignal 28 erzeugt. Das Abtastsignal 28 wird durch Frequenzteilung des Taktoszillatorsignals 30 eines Slave-internen Taktoszillators 32 erzeugt, wozu ein rationaler Frequenzteiler 34 eingesetzt wird. Das von diesem rationalen Frequenzteiler 34 gebildete Abtastsignal 28 weist ein ganzzahliges Frequenzverhältnis oder ein in Zweierpotenz gebrochen rationales Frequenzverhältnis zum Taktoszillatorsignal 30 auf. Im Bit-Decoder 26 erfolgt typischerweise eine Überabtastung des Empfangsbitstroms 23. Sobald das erste Bit abgetastet und erkannt worden ist, wird es vom Bit-Decoder 26 zu einem Bit-Generator 36 weitergegeben, in dem ein Sendebitstrom 38 bitweise aufgebaut und die Bits noch während der Zeit, in der der Empfangsbitstrom 23 einläuft, über den zum nächsten Slave 14 weisenden Abschnitt 40 des Zweidraht-Kommunikationsleitung 16 gesendet.

In dem Bit-Generator 36 erfolgt die Aneinanderreihung der einzelnen Bits, was ihre zeitliche Aufeinanderfolge betrifft, anhand und auf Basis der Frequenz des Abtastsignals 28. Die Überabtastungsrate ist hierzu bekannt, so dass die zuvor detektierten Bits des Empfangsbitstroms 23 wiederum in ihrer Phase genaustens abgebildet werden können. Nach Erkennung des ersten Bits des Empfangsbitstroms 23 wird bereits vom Bit-Generator 36 das nachgebildete erste Bit als Beginn das Sendebitstroms 38 an den nächsten Slave 14 gesendet.

Parallel zu diesem Prozess läuft der Prozess des Auslesens der einzelnen Bits des Empfangsbitstroms 23 ab, wozu der Bit-Decoder 26 mit einem Byte-Decoder 42 verbunden ist, der nach Erkennung und Decodierung eines Bites dieses an eine Digitalsignalverarbeitungseinheit 44 weitergibt, in der die Verarbeitung der durch die Bits und Bites repräsentierten Daten erfolgt, wie es üblicherweise bei Slaves 14 bekannt ist. In diesem Ausführungsbeispiel werden die übertragenen Daten entsprechend die drei Stromquellen 46 für die RGB-LEDs 48 angesteuert.

Das Ende eines Byte-Frame wird durch mindestens ein Stoppbit erkannt, das beispielsweise genutzt werden kann, um der Abtastvorrichtung 24 zu signalisieren, dass der Byte-Frame übertragen worden ist. Mit Beginn des nächsten Byte-Frame synchronisiert sich der rationale Frequenzteiler 34 wieder auf den nächsten Byte-Frame auf. Je nach Genauigkeit, mit der der Taktoszillator 32 sein Taktoszillatorsignal 30 erzeugt und mit der der rationale Frequenzteiler 34 die Frequenzteilung durchführt und damit das Abtastsignal 28 erzeugt, braucht die Aufsynchronisation des Abtastsignals 28 auf den nächsten einlaufenden Empfangsbitstroms 23 nicht bei jedem Empfangsbitstrom 23 zu erfolgen.

Die wesentliche erfindungsgemäße Eigenschaft des Slave 14 ist in der direkten bitweisen Weitergabe der Bits des Empfangsbitstroms 23 als Sendebitstrom 38 zum nächsten Slave 14 zu sehen. Damit ist die Latenz bei der Übertragung der Daten von Slave 14 zu Slave 14 auf die Übertragungsdauer eines Bits reduziert. Das hat den unschätzbaren Vorteil, dass nun auch bei extrem langen Ketten (mit beispielsweise mehr als 512 Slaves) die Latenz zwischen dem Aussenden der Daten durch den Busmaster 12 bis zum Empfang dieser Daten durch den letzten Slave 14 der Kette noch tolerabel ist.

### BEZUGSZEICHENLISTE

- 10: Daisy-Chain-Kommunikationsbussystem
- 12: Busmaster
- 14: Slave
- 16: Zweidraht-Kommunikationsleitung
- 18: RGB-Beleuchtungseinheit
- 20: Abschnitt
- 22: Flankendetektor
- 23: Empfangsbitstrom
- 24: Abtastvorrichtung
- 26: Bit-Decoder
- 28: Abtastsignal
- 30: Taktoszillatorsignal
- 32: Taktoszillator
- 34: Frequenzteiler
- 36: Bit-Generator
- 38: Sendebitstrom
- 40: Abschnitt
- 42: Byte-Decoder
- 44: Digitalsignalverarbeitungseinheit
- 46: Stromquelle
- 48: RGB-LED

## Patentansprüche

1. Verfahren zur Übertragung von Bitströmen in einem Daisy-Chain-Kommunikationsbussystem (10) mit einem Busmaster und einer Vielzahl von Slaves (14), die seriell in einen mit dem Busmaster verbundenen Datenbus geschaltet sind, wobei ein Bitstrom von einem Slave (14) als Empfangsbitstrom (23) empfangen und von ihm als Sendebitstrom (38) zu einem benachbarten Slave (14) gesendet wird, wobei bei dem Verfahren in einem Slave (14)
- ein Empfangsbitstrom (23) mit einem Abtastsignal (28) abgetastet wird, dessen Frequenz aus der Taktfrequenz eines internen Taktoszillatorsignals (30) durch einen Frequenzteiler (34), dem das Taktoszillatorsignal (30) zugeführt wird, gebildet wird,
- wobei die Frequenz des internen Taktoszillatorsignals (30) um weniger als eine Zehnerpotenz oberhalb der Frequenz liegt, mit der die Bits des Empfangsbitstroms (23) aufeinanderfolgen,
- wobei der Frequenzteiler (34) ein rationaler Frequenzteiler (34) ist, der aus dem internen Taktoszillatorsignal (30) ein Abtastsignal (28) erzeugt, welches ein ganzzahliges oder in Zweierpotenz gebrochenes rationales Frequenzverhältnis von 2^{-m} zum internen Taktoszillatorsignal (30) aufweist, mit m als natürliche Zahl größer 0,
- wobei das Abtastsignal (28) hinsichtlich der Frequenz und/oder der Phase synchron zum Empfangsbitstrom (23) ist und
- wobei dem Frequenzteiler (34) das Ausgangssignal eines Signalflanken des Eingangsbitstroms detektierenden Flankendetektors (22) zugeführt wird,
- mit Hilfe des Abtastsignals (28) die einzelnen Bits des Empfangsbitstroms (23) abgetastet werden,
- das Ende der Übertragungsdauer jedes Bits des Empfangsbitstroms (23) erkannt wird und diese Information dem Frequenzteiler (34) zugeführt wird,
- ein Sendebitstrom (38) während des Empfangs des Empfangsbitstroms (23) gebildet wird, und zwar bitweise, indem nach dem Ende der Übertragungsdauer eines Bits des Empfangsbitstroms (23) der Sendebitstrom (38) um ein zum jeweiligen empfangenen Bit logisch gleiches Bit ergänzt und anschließend gesendet wird, und
- die zeitliche Aufeinanderfolge der Bits des Sendebitstroms (38) gleich der zeitlichen Aufeinanderfolge der Bits des Empfangsbitstroms (23) ist und auf Basis der Frequenz des Abtastsignals (28) erfolgt.

2. Verfahren nach Anspruch 1, **dadurch gekennzeichnet, dass** die Frequenz des Abtastsignals (28) für eine n-fache Überabtastung, mit n als natürliche Zahl größer 1, als Verhältnis n zwischen der Bitübertragungsdauer und dem Zeitabstand zwischen jeweils zwei aufeinanderfolgenden Abtastungen gewählt wird, wobei die aus der n-fachen Überabtastung resultierende Frequenzerhöhung bei der zeitlichen Aufeinanderfolge, mit der die Sendebits gesendet werden, unberücksichtigt bleibt.

3. Verfahren nach Anspruch 1 oder 2, **dadurch gekennzeichnet, dass** zeitlich parallel zur Abtastung des Empfangsbitstroms (23) dieser durch einen Decoder des Slave (14) ausgelesen und weiterverarbeitet wird.

4. Vorrichtung zur Verwendung als Slave (14) für ein Daisy-Chain-Kommunikationsbussystem (10) mit einem Busmaster und einer Vielzahl von Slaves (14), wobei der Slave (14) von dem Busmaster oder von einem benachbarten Slave (14) einen Empfangsbitstrom (23) empfängt und einen Sendebitstrom (38) erzeugt sowie an einen benachbarten oder an seinen anderen benachbarten Slave (14) sendet, mit
- einem Flankendetektor (22) zur Erkennung von Bits eines Empfangsbitstroms (23),
- einem internen Taktoszillator (32) zur Erzeugung eines Taktoszillatorsignals (30),
- einem mit dem internen Taktoszillator (32) verbundenen Frequenzteiler (34) zur Erzeugung eines aus dem Taktoszillatorsignal (30) gebildeten Abtastsignals (28) zum Abtasten des Empfangsbitstroms (23),
- wobei die Frequenz des internen Taktoszillatorsignals (30) um weniger als eine Zehnerpotenz oberhalb der Frequenz liegt, mit der die Bits des Empfangsbitstroms (23) aufeinanderfolgen,
- wobei der Frequenzteiler (34) ein rationaler Frequenzteiler (34) ist, der aus dem internen Taktoszillatorsignal (30) ein Abtastsignal (28) erzeugt, welches ein ganzzahliges oder in Zweierpotenz gebrochenes rationales Frequenzverhältnis von 2^{-m} zum internen Taktoszillatorsignal (30) aufweist, mit m als natürliche Zahl größer 0,
- wobei das Abtastsignal (28) hinsichtlich der Frequenz und/oder der Phase synchron zum Empfangsbitstrom (23) ist und
- wobei der Frequenzteiler (34) das Ausgangssignal des Flankendetektors (22) empfängt,
- einem Bit-Decoder (26) zur Erkennung eines Bits in dem Empfangsbitstrom (23) mittels des Abtastsignals (28),
- einem Bit-Generator (36) zum sukzessiven Bilden eines Sendebitstroms (38), und zwar nach jeweils einem erkannten Bit des Empfangsbitstroms (23) und damit bitweise sowie in einer zeitlichen Aufeinanderfolge, die gleich der zeitlichen Aufeinanderfolge von durch den Flankendetektor erkannten Bits des Empfangsbitstroms (23) ist,
- einem Byte-Decoder (42) zur Erkennung einer vorgebbaren Anzahl von aufeinanderfolgenden Bits aus der Folge von Bits des Empfangsbitstroms (23) und
- einer Digitalsignalverarbeitungseinheit (44) zur Weiterverarbeitung von erkannten Bits des Empfangsbitstroms (23).

## Claims

1. A method for transmitting bitstreams in a daisy chain communication bus system (10) comprising a bus master and a plurality of slaves (14) connected in series into a data bus connected to the bus master, wherein a bitstream is received as a reception bitstream (23) by a slave (24) and is transmitted by the same to an adjacent slave (14) as a transmission bitstream (38), wherein, according to the method, in a slave (14)
- a reception bitstream (23) is scanned using a scanning signal (28) whose frequency is formed from the clock frequency of an internal clock oscillator signal (30) by a frequency divider (34) to which the clock oscillator signal (30) is supplied,
- wherein the frequency of the internal clock oscillator signal (30) is higher by less than one decimal power than the frequency at which the bits of the reception bitstream (23) succeed each other,
- wherein the frequency divider (34) is a rational frequency divider (34) which generates a scanning signal (28) from the internal clock oscillator signal (30), which scanning signal has a rational frequency ratio of 2^{-m}, either integral or broken in powers of two, to the clock oscillator signal (30), wherein m is a natural number greater than 0,
- wherein the scanning signal (28) is synchronous with the reception bitstream (23) with regard to frequency and/or phase and
- wherein the frequency divider (34) is supplied with the output signal of an edge detector (22) detecting signal edges of the input bitstream,
- the individual bits of the reception bitstream (23) being scanned by means of the scanning signal (26),
- the end of the transmission period of ach bit of the reception bitstream (23) being detected and this information being supplied to the frequency divider (34),
- a transmission bitstream (38) being formed in a bit-wise manner as the reception bit stream (23) is received, by completing, after the end of the transmission period of a bit of the reception bitstream (23), the transmission bitstream (38) with a bit which is logically identical to the respective received bit and subsequently transmitting the same, and
- the chronological sequence of the bits of the transmission bitstream (38) is equal to the chronological sequence of the bits of the reception bitstream (23) and occurs based on the frequency of the scanning signal (28).

2. Method according to claim 1, **characterized in that** the frequency of the scanning signal (28) for a n-time oversampling, with n being a natural number greater than 1, is selected as a ratio n between the bit transmission period and the interval between two respective successive scans, wherein the frequency increase resulting from the n-time oversampling is neglected in the chronological succession at which the transmission bits are transmitted.

3. Method according to claim 1 or 2, **characterized in that** chronologically parallel to the scanning of the reception bitstream (23) the same is read out by a decoder of the slave (14) and processed further.

4. Device for use as a slave (14) in a daisy chain communication bus system (10) comprising a bus master and a plurality of slaves (14), wherein the slave (14) receives a reception bit stream (23) from the bus master or from an adjacent slave (14) and generates a transmission bit stream (38), as well as transmits the same to one adjacent slave or to its other adjacent slave (14), comprising
- an edge detector (22) for detecting bits of a reception bitstream (23),
- an internal clock oscillator (32) for generating a clock oscillator signal (30),
- a frequency divider (34) for generating a scanning signal (28) for scanning the reception bit stream (23) and being formed from the clock oscillator signal (30), said frequency divider being connected to the internal clock oscillator (32),
- wherein the frequency of the internal clock oscillator signal (30) is higher by less than one decimal power than the frequency at which the bits of the reception bitstream (23) succeed each other,
- wherein the frequency divider (34) is a rational frequency divider (34) which generates a scanning signal (28) from the internal clock oscillator signal (30), which scanning signal has a rational frequency ratio of 2^{-m}, either integral or broken in powers of two, to the clock oscillator signal (30), wherein m is a natural number greater than 0,
- wherein the scanning signal (28) is synchronous with the reception bitstream (23) with regard to frequency and/or phase and
- wherein the frequency divider (34) receives the output signal of the edge detector (22),
- a bit detector (26) for detecting a bit in the reception bitstream (23) by means of the scanning signal (28),
- a bit generator (36) for successively forming a transmission bitstream (38) after each detected bit of the reception bitstream (23) and thus bit-wise, as well as in a chronological succession which is equal to the chronological succession of bits of the reception bitstream (23) detected by the edge detector,
- a byte decoder (42) for detecting of a predeterminable number of successive bits of the succession of bits of the reception bitstream (23) and
- a digital signal processing unit (44) for the further processing of detected bits of the reception bitstream (23).

## Revendications

1. Procédé de transmission de flux de bits dans un système de bus de communication en guirlande (10) avec un maître-bus et une pluralité d'esclaves (14), lesquels sont commutés en série dans un bus de données relié au maître bus, dans lequel un flux de bits est reçu par un esclave (14) en tant que flux de bits de réception (23) et est envoyé par celui-ci à un esclave (14) contigu en tant que flux d'émission (38), dans lequel lors du procédé, dans un esclave (14)
- un flux de bits de réception (23) est échantillonné avec un signal d'échantillonnage (28) dont la fréquence est formée à partir de la fréquence d'horloge d'un signal interne d'oscillateur de cadencement (30) par un diviseur de fréquence (34) auquel est fourni le signal d'oscillateur de cadencement (30),
- dans lequel la fréquence du signal interne d'oscillateur de cadencement (30) est supérieure de moins d'une puissance de 10 à la fréquence à laquelle les bits du flux de réception (23) se succèdent,
- dans lequel le diviseur de fréquence (34) est un diviseur de fréquence rationnel (34) générant à partir du signal interne d'oscillateur de cadencement (30) un signal d'échantillonnage (28), lequel comporte un rapport de fréquence entier ou fractionné en puissance de 2 de 2^{-m} par rapport au signal interne d'oscillateur de cadencement (30), m étant un entier naturel strictement positif,
- dans lequel le signal d'échantillonnage (28) est synchrone avec le flux de bits de réception (23) en ce qui concerne la fréquence et/ou la phase et
- dans lequel le signal de sortie d'un détecteur de fronts (22) détectant un front du signal du flux de bits d'entrée est fourni au diviseur de fréquence (34),
- les bits individuels du flux de bits de réception (23) sont échantillonnés à l'aide du signal d'échantillonnage (28),
- la fin de la durée de transmission de chaque bit du flux de réception (23) est reconnue et cette information est fournie au diviseur de fréquence (34),
- un flux de bits d'émission (38) est formé pendant la réception du flux de bits de réception (23), à savoir bit par bit, le flux de bits d'émission (38) étant complété par un bit logiquement identique au bit respectivement reçu et étant ensuite émis après la fin de la durée de transmission d'un bit du flux de réception (23), et
- la succession chronologique des bits du flux d'émission (38) est identique à la succession chronologique des bits du flux de réception (23) et s'effectue sur la base de la fréquence du signal d'échantillonnage (28) .

2. Procédé selon la revendication 1, **caractérisé en ce que** la fréquence du signal d'échantillonnage (28) est choisie pour un suréchantillonnage de facteur n, n étant un entier naturel supérieur à 1, comme rapport n entre la durée de transmission de bits et l'intervalle de temps respectif entre deux échantillonnages successifs, dans lequel l'augmentation de fréquence résultant du suréchantillonnage de facteur n lors de la succession chronologique avec laquelle les bits d'émission sont émis, reste non prise en compte.

3. Procédé selon la revendication 1 ou 2, **caractérisé en ce que** parallèlement à l'échantillonnage du flux de bits de réception (23) celui-ci est lu et traité ultérieurement par un décodeur de l'esclave (14).

4. Dispositif destiné à être utilisé comme esclave (14) pour un système de bus de communication en guirlande (10) avec un maître-bus et une pluralité d'esclaves (14), dans lequel l'esclave (14) reçoit du maître bus ou d'un esclave contigu (14) un flux de bits de réception (23) et génère un flux de bits d'émission (38) et l'émet vers un esclave contigu ou son autre esclave contigu (14), doté
- d'un détecteur de fronts (22) destiné à reconnaître des bits d'un flux de réception (23),
- d'un oscillateur de cadencement interne (32) destiné à générer un signal d'oscillateur de cadencement (30),
- d'un diviseur de fréquence (34) relié à l'oscillateur de cadencement interne (32) destiné à générer un signal d'échantillonnage (28) formé à partir du signal d'oscillateur de cadencement (30) afin d'échantillonner le flux de bits de réception (23),
- dans lequel la fréquence du signal interne d'oscillateur de cadencement (30) est supérieure de moins d'une puissance de dix à la fréquence à laquelle les bits du flux de réception (23) se succèdent,
- dans lequel le diviseur de fréquence (34) est un diviseur de fréquence rationnel (34) générant à partir du signal interne d'oscillateur de cadencement (30) un signal d'échantillonnage (28), lequel comporte un rapport de fréquence entier ou fractionné en puissance de 2 de 2-m par rapport au signal interne d'oscillateur de cadencement (30), m étant un entier naturel strictement positif,
- dans lequel le signal d'échantillonnage (28) est synchrone avec le flux de bits de réception (23) en ce qui concerne la fréquence et/ou la phase et
- dans lequel le diviseur de fréquence (34) reçoit le signal de sortie du détecteur de fronts (22),
- d'un décodeur de bits (26) destiné à reconnaître un bit dans le flux de bits de réception (23) au moyen du signal d'échantillonnage (28),
- d'un générateur de bits (36) destiné à la formation successive d'un flux de bits d'émission (38), à savoir respectivement après un bit reconnu du flux de réception (23) et ainsi bit par bit et dans une succession chronologique identique à la succession chronologique des bits du flux de réception (23) reconnus par le détecteur de fronts,
- d'un décodeur de n-uplet (42) destiné à reconnaître un nombre pré-définissable de bits consécutifs parmi la série de bits du flux de réception (23) et
- d'une unité de traitement de signal numérique (44) destinée au traitement ultérieur des bits reconnus du flux de réception (23).
